(19) Europäisches Patentamt

European Patent Office

Office européen des brevets

(11) EP 0 780 708 A2

(12) EUROPÄISCHE PATENTANMELDUNG

(43) Veröffentlichungstag:
25.06.1997 Patentblatt 1997/26

(51) Int. Cl.$^6$: G02B 5/23

(21) Anmeldenummer: 96118087.4

(22) Anmeldetag: 12.11.1996

(84) Benannte Vertragsstaaten:
DE ES FR GB IT

(30) Priorität: 19.12.1995 DE 19547327

(71) Anmelder: DAIMLER-BENZ AKTIENGESELLSCHAFT
70567 Stuttgart (DE)

(72) Erfinder:
• Holdik, Karl, Dr.
  89081 Ulm (DE)
• Bechinger, Clemens, Dr.
  78464 Konstanz (DE)
• Leiderer, Paul, Prof. Dr.
  78476 Allensbach (DE)
• Wirth, Eckehard
  8037 Zürich (CH)

(54) **Schicht mit einem photochromen Material, Verfahren zu deren Herstellung sowie deren Verwendung**

(57) Die Erfindung betrifft eine Schicht mit einem photochromen Material, deren Herstellung sowie deren Verwendung. Das photochrome Material der Schicht weist einen optisch reversiblen photochromen Effekt auf, dessen Schaltschwelle außerhalb oder im Randbereich des sichtbaren Spektralbereichs angeordnet ist. Damit die Verwendung einer derartigen Schicht erweitert ist, ist das photochrome Material mit einem solchen Beeinflussungsmaterial beschichtet, daß die Schaltschwelle des beschichteten photochromen Materials gegenüber der Schaltschwelle des unbeschichteten photochromen Materials in Richtung größerer Wellenlängen verschoben ist.

Fig. 1

## Beschreibung

Die Erfindung betrifft eine Schicht mit einem photochromen Material gemäß dem Oberbegriff des Anspruchs 1 bzw. ein Verfahren zu deren Herstellung gemäß dem Oberbegriff des Anspruchs 11 sowie die Verwendung der Schicht.

In dem DE-Lehrbuch „Römpp Chemisches Lexikon" Band 9, 1993 Georg Thieme Verlag Stuttgart New York, S.3403 ist der photochrome Effekt als reversible Stoffeigenschaft beschrieben, der sich dadurch auszeichnet, daß sich bei Einfall von sichtbarem oder ultraviolettem Licht das photochrome Material stofflich ändert. Mit der stofflichen Änderung geht eine farbige Änderung einher. Allerdings weisen einige dieser Materialien zumeist eine Schaltschwelle, also das Einsetzen des photochromen Effekts, auf, die am violetten hochenergetischen Rand des sichtbaren Spetralbereiches oder darunter angeordnet sind, wodurch die Verwendbarkeit derartiger Materialien im sichtbaren Spektralbereich zumindest stark eingeschränkt ist.

Die Aufgabe der Erfindung ist es, die Verwendbarkeit von photochromen Materialien im optisch sichtbaren Spektralbereich des elektromagnetischen Spektrums zu erhöhen.

Die Aufgabe der Erfindung wird durch die kennzeichnenden Merkmale des Anspruchs 1 bzw. bzgl. des zugrundegelegten Verfahrens mit den kennzeichnenden Verfahrensschritten des Anspruchs 11 gelöst. Durch die Ausnützung eines vermutlich inneren Photoeffekts kann die Schaltschwelle für den photochromen Effekt hin zu größeren Wellenlängen und damit in den optisch sichtbaren Spektralbereich verschoben werden, wodurch für das Einsetzen des photochromen Effekts eine geringere Photonenenergie benötigt wird. Da die Sonne innerhalb des sichtbaren Spektralbereichs eine Intensitätsverteilung aufweist, deren Maximum etwa bei einer Wellenlänge 500 nm liegt, stehen einer erfindungsgemäßen Schicht bei Tageslicht eine hohe Photonenzahl für den photochromen Effekt zur Verfügung, was sich in einer stärkeren Absorption und damit in einer besseren Farbigkeit der Schicht äußert. Von Vorteil ist ferner, das aufgrund der Verschiebung der Schaltschwelle nunmehr eine größere Anzahl von Lasern verwendet werden kann.

Zweckmäßige Ausgestaltungen der Erfindung sind den Unteransprüchen entnehmbar. Im übrigen wird die Erfindung anhand von in den Figuren dargestellten Ausführungsbeispielen erläutert. Dabei zeigt

Fig. 1     ein Schnitt durch ein Glas-Substrat mit darauf aufgedampften Lagen eines Beeinflussungs- und eines photochromen Materials,

Fig. 2     eine schematische Darstellung des Verlaufs des Valenz- und des Leitungsband im Bereich der Grenzfläche zwischen dem Beeinflussungs- und dem photochromen Material,

Fig. 3     ein Diagramm der Einfärbrate über der Wellenlänge,

Fig. 4     eine schematische Darstellung der Einfärbung in der Abhängigkeit der Zeit,

Fig. 5     einen Aufbau einer optischen Speichereinheit für die Informations- bzw. Computertechnik unter Verwendung der photochromen Schicht,

Fig. 6     ein die photochrome Schicht aufweisendes und mit einem holographischen Punktmuster belichtetes Glas-Substrat,

Fig. 7     ein die photochrome Schicht aufweisendes und mit einem ein optisches Gitter ausbildenden Strichmuster belichtetes Glas-Substrat,

Fig. 8     einen Lackaufbau eines Effekt-Lacks einer Kfz-Karosserie, wobei dem Lackaufbau eine photochrome Schicht aufweisende Pigmente beigegeben sind und

Fig. 9     einen Lackaufbau von Gebäuden mit die photochrome Schicht aufweisenden Pigmenten.

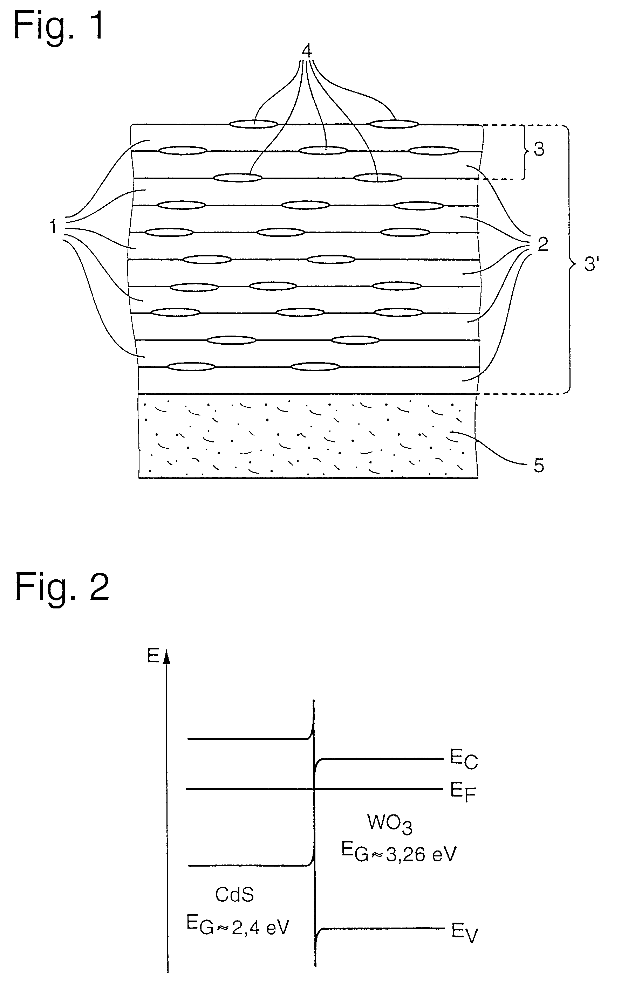

In Figur 1 ist ein Schnitt durch ein Glas-Substrat 5 dargestellt, das auf einer Seite mit einer photochromen Schicht 3' bedampft ist. Die Schicht 3' weist zwei sich alternierend abwechselnde Lagen aus einem Beeinflussungsmaterial 2 und aus einem photochromen Material 1 auf. Bei dem Beeinflussungsmaterial 1 des Ausführungsbeispiels handelt es sich um amorph aufgedampftes elektrisch halbleitendes Cadmium-Sulfid (CdS), während das photochrome Material 1 amorph aufgedampftes Wolframoxid $WO_3$ ist. Anstelle des Halbleiters CdS als Beeinflussungsmaterial 2 kann u.a. auch ein Halbleitermaterial der gegen eine Photodegration besonders stabilen Gruppe der Titanate verwendet werden.

Durch das Aufdampfen des photochromen Materials 1 auf die bereits auf dem Glas-Substrat 5 aufgedampfte Lage aus dem Beeinflussungsmaterial 2 weist das phototchrome Material 1 einen ladungsträgertransportfähigen Kontakt mit dem Beeinflussungsmaterial 2 auf.

Wie aus Figur 2 ersichtlich ist, weist das als Beeinflussungsmaterial 2 ausgewählte Cadmiumsulfid (CdS) zwischen dem elektronischen Valenz- ($E_v$) und dem elektronischen Leitungsband $E_c$ mit $E_g = 2,4$ eV eine kleinere Bandlücke $E_g$ als das photochrome Material 1 verwendete $HWO_3$ mit einer Bandlücke von $E_g = 3,26$ eV auf. Da sich die Bänder im Bereich der Grenzfläche zwischen den beiden Lagen aus dem Beeinflussungsmaterial 2 und dem photochromen Material 1 auf der Höhe ihres jeweiligen mit unterschiedlichem Abstand zu ihrem jeweiligen Leitungsband $E_c$ angeordneten Fermi-Niveaus $E_f$ annähern, weist der Bandverlauf einer erfindungsgemäßen Schicht 3, 3' im Bereich der Grenzfläche zwischen der Lage des Beeinflussungsmaterials 2 und des photochromen Materials 1 eine Banddiskontinuität auf.

Das Beeinflussungsmaterial 2 ist derart gewählt, daß Ladungsträger des Beeinflussungsmaterials 3 innerhalb des optischen Spektralbereichs aktivierbar sind. Des weiteren muß zumindest für eine Art von Ladungsträgern hinsichtlich eines Ladungsträgertransports zwischen dem Beeinflussungsmaterial 2 und dem photochromen Material 1, ggf. unter Beachtung einer etwaigen Potentialbarriere, ein quantenmechanisches Übergangsmatrixelement existieren, das größer als Null ist. Die Potentialbarriere muß kleiner als die Differenz des Bandlückenunterschiedes zwischen dem photochromen Material 1 und dem Beeinflussungsmaterial 2 sein.

Werden diese Bedingungen eingehalten, ist die Schaltschwelle $S_1$ des photochromen Effekts der Schicht 3, 3', also derjenigen Wellenlänge, unterhalb deren der photochrome Effekt der Schicht 3, 3' einsetzt, gegenüber der Schaltschwelle $S_2$ des reinen photochromen Materials 1 hin zu größeren Wellenlängen und damit hin zu kleineren Photonenenergien des einzustrahlenden Lichts bzw. der einzustrahlenden elektromagnetischen Wellen verschoben.

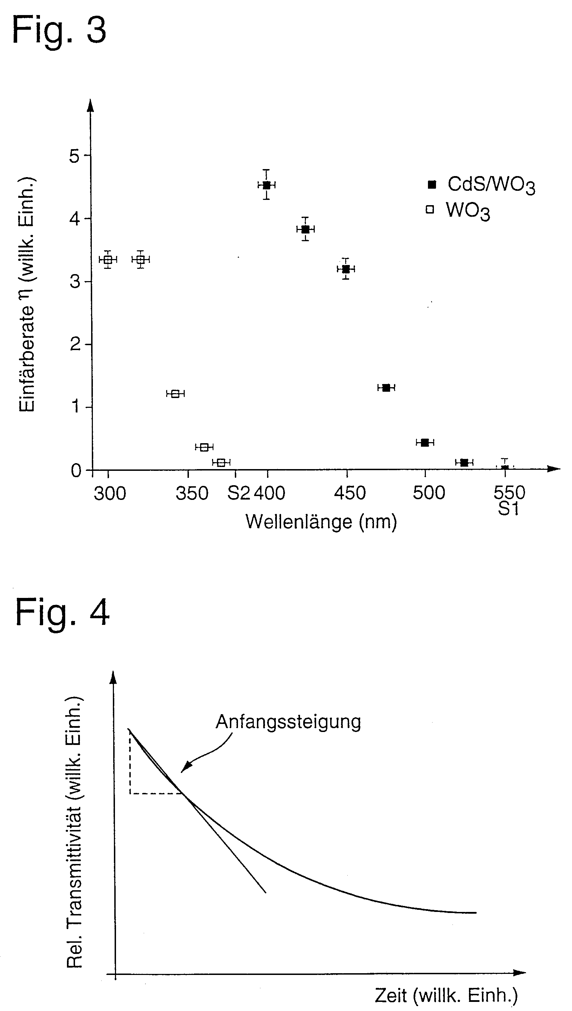

Dieser Zusammenhang ist in dem Diagramm gemäß Figur 3 dargestellt. In diesem Diagramm ist für eine erfindungsgemäße CdS/WO$_3$-Schicht 3, 3' und für eine Lage aus reinem, unbeschichteten photochromen WO$_3$ die wellenlängenabhängige Einfärbrate $\eta_{abs}$, die ein Maß der wellenlängenabhängigen Absorption ist, als Funktion der Wellenlänge $\lambda$ aufgetragen. Die intensitätsbereinigte wellenlängenabhängige Einfärbrate $\eta_{abs}$ ergibt sich als Verhältnis der gemessenen Einfärbrate $\eta_{dir}$ zu der Intensität des eingestrahlten Lichts $I_{abs}(\lambda)$. Hierbei zeigt sich eindeutig, daß die Schaltschwelle $S_1$ der erfindungsgemäßen CdS/WO$_3$-Schicht 3, 3' bei 525 nm und damit in der Wellenlänge um ca. 145 nm höher liegt als die Schaltschwelle $S_2$ des unbeschichteten WO$_3$.

Zur Herstellung der erfindungsgemäßen und für die Diagramme der Figuren 3 und 4 verwandten CdS/WO$_3$-Schicht 3 wurde ein Glas-Substrat 5 in den Rezipienten einer Vakuumaufdampfanlage eingebracht und zuerst mit CdS und anschließend mit WO$_3$ bedampft. Die Fläche des in üblicher Weise gereinigten Glas-Substrats 5 betrug 12 cm$^2$, der Abstand zwischen Glas-Substrat 5 und Verdampferschiffchen bzw. Verdampferauelle betrug zwischen 30 und 60 cm, der eingestellte Druck betrug $1{,}5 \cdot 10^{-5}$ mbar, während des 140 s dauernden Verdampfens von 1 bis 2 g 99,9%-reinem CdS wurde das Schiffchen, in dem das CdS gehalten auf Rotglut erhitzt, wodurch das CdS zum Teil verdampft wurde und sich auf dem Glas-Substrat 5 eine 70 nm dicke CdS-Lage abgeschiedete. Das Aufdampfen der 200 nm dikken WO$_3$-Lage erfolgten bei einem Druck $1{,}5 \cdot 10^{-5}$ bis

$2{,}5 \cdot 10^{-5}$ mbar, wobei ca. 1 - 2 g WO$_3$ verdampft wurden.

Die Verschiebung der Schaltschwelle $S_1$ ist ein absoluter Wert, wobei die Intensität der Einfärbrate $\eta_{dir}$ bzw. $\eta_{abs}$, also dasjenige Maß, daß das die Absorptionsfähigkeit der erfindungsgemäßen Schicht 3, 3' bis hin zu ihrer Sättigung angibt, u.a. eine Funktion der Zeit ist.

Dieser Zusammenhang ist in Figur 4 in einem Diagramm dargestellt. Zur Ermittlung des zeitlichen Verlaufs der Einfärbrate $\eta_{dir}$ der CdS/WO$_3$-Schicht 3 wurde die Schicht 3 an unterschiedlichen Stellen unterschiedlich lang mit einem Licht der Wellenlänge 480 nm bestrahlt. Wie aus Figur 3 ersichtlich ist, ist diese Wellenlänge unterhalb der Schaltschwelle $S_1$ des photochromen Effektes der erfindungsgemäßen Schicht 3 angeordnet, weshalb sie an den unterschiedlichen Stellen in Abhängigkeit der belichteten bzw. bestrahlten Zeit unterschiedlich eingefärbt wurde.

Zur Bestimmung der Einfärbrate $\eta_{dir}$ wurde die transmittierte Intensität, also die Intensität des durch die CdS/WO$_3$-Schicht 3 gelangenden Lichts, dessen Wellenlänge 668 nm betrug und damit oberhalb der Schaltschwelle $S_1$ der CdS/WO$_3$-Schicht 3 und auch des unbeschichteten photochromen Materials 1 WO$_3$ angeordnet war, gemessen. Vor der Messung wurde überprüft und sichergestellt, daß der eine Wellenlänge von 668 nm aufweisende Meßstrahl bei der CdS/WO$_3$-Schicht 3 keinerlei photochromen Effekt erzeugte.

Der Verlauf der zeitlichen Transmittivität T(t) bei einer Wellenlänge $\lambda$ kann zumindest angenähert durch eine Exponential-Funktion gemäß der Formel

$$T(t) = T(t_0) - A_s(1-e^{(-t/\tau)})$$

beschrieben werden, wobei $T(t_0)$ die Transmittivität zum Anfangszeitpunkt $t_0$, $A_s$ die maximale (Sättigungs-) Absorption der CdS/WO$_3$-Schicht 3, t, die Zeitdauer nach $t_0$ und $\tau$ eine dem Betrag der Anfangssteigung der T(t)-Kurve entsprechende Zeitkonstante ist, die bei den vorgenommenen Versuchen zwischen 10 und 60 s betrug.

Prinzipiell erfolgt die Verschiebung der Schaltschwelle $S_1$ einer erfindungsgemäßen Schicht 3, 3' gegenüber der Schaltschwelle $S_2$ des reinen photochromen Materials 1 schon bei einer mit einer einzigen Lage Beeinflussungsmaterial 2 beschichteten Lage photochromen Materials 1, also bei einer Doppel-Schicht 3.

Hierzu sind in der nachfolgenden Tabelle zwei Beispiele angegeben. Bei der Probe 1 handelt es sich um eine Doppel-Schicht 3 bei der auf ein Glas-Substrat 5 eine 70 nm dicke Lage CdS und nachfolgend eine 200 nm dicke WO$_3$-Lage aufgebracht wurde. Bei der Probe 2 handelt es sich um auf einem Glas-Substrat 5 aufgebrachte Mehrfachschichten, wobei die aus den Mehrfachschichten gebildete Multi-Schicht 3' fünf aufeinanderfolgende Doppel-Schichten 3 aufweist, wobei jede der Doppel-Schichten 3 eine 10 nm dicke CdS-Lage und eine 40 nm dicke $WO_3$-Lage aufweist. Die Aufdampfbedingungen für die Probe 1 und 2 waren, bis auf die unterschiedlichen Dicken der einzelnen Lagen, gleich.

Die Proben 1 und 2 wurden mit einem Laser der unterhalb der Schaltschwelle $S_1$ der jeweiligen CdS/$WO_3$-Schichten 3, 3' der Proben 1 und 2 liegenden Wellenlänge von 480 nm bis zur Sättigung $A_s$ eingefärbt. Die Belichtungszeit betrug hierbei zwischen 5 min und zwei Tagen. Die erreichte Einfärbrate $\eta_{dir}$ wurde bei einer oberhalb der Schaltschwelle $S_1$ der jeweiligen CdS/$WO_3$-Schicht 3, 3' der Proben 1 und 2 angeordneten Wellenlänge von 668 nm gemessen. Wie schon zuvor erwähnt, erzeugt dieses Meß-Licht keinen photochromen Effekt.

Die Einfärbrate $\eta_{dir}$ ist definiert als die erste zeitliche Ableitung der obigen Funktion der zeitlichen Transmittivität T(t), so daß gilt:

$$\eta_{dir} = -A_s/\tau \cdot e^{(-t/\tau)}$$

| Schicht | $\eta_{dir}$ |
|---|---|
| Probe 1 (Doppel-Schicht) | 0,2 |
| Probe 2 (Multi-Schicht) | 5,0 |

Gemäß der vorstehenden Tabelle ist die Einfärbrate $\eta_{dir}$ der eine Multi-Schicht 3' aufweisenden Probe 2 um das 25-fache größer als die entsprechende Einfärbrate $\eta_{dir}$ der aus einer Doppel-Schicht 3 gebildeten Probe 1. Wie es sich aus diesem Vergleich ferner erweist, kann durch Mehrfachschichten bei etwa gleichem Masseneinsatz der photochrome Effekt einer erfindungsgemäßen Schicht 3' um ein Vielfaches gesteigert werden.

Dies kann als Hinweis dafür gewertet werden, daß im sichtbaren Spektralbereich die Einfärbrate $\eta_{dir}$ des photochromen Effekts einer erfinderischen Schicht 3, 3' durch die Vergrößerung der Kontaktfläche zwischen dem Beeinflussungsmaterial 2 und dem photochromen Material 1 erhöht werden kann. Eine derartige Erhöhung der Kontaktfläche ist insbesondere dadurch zu realisieren, daß die einzelnen Lagen von photochromen Material 1 und Beeinflussungsmaterial 2 in einem kolloidalen Sol-Gel-Prozeß auf das insbesondere Glas-Substrat 5 aufgebracht werden.

Die Einfärbrate $\eta_{dir}$ einer erfindungsgemäßen Schicht 3, 3' kann ferner dadurch erhöht werden, daß zwischen das Beeinflussungsmaterial 2 und das photochrome Material 1 ein Reaktivmaterial 4 zumindest bereichsweise eingebracht wird. Um dies zu zeigen, wurden zwei Proben 3 und 4 hergestellt, die weitgehend der obigen eine Doppel-Schicht 3 aufweisenden Probe 1 entsprechen. Allerdings wurde bei Probe 4 die CdS-Lage nach deren Aufdampfen mit Wasserdampf beaufschlagt und erst danach das $WO_3$ aufgedampft. Anschließend wurde auch hier die CdS/$WO_3$-Schicht 3 mit Rotlicht der Wellenlänge 668 nm bestrahlt und die Rotlicht-Transmission gemessen. Als Ergebnis der Messung wurde hier die mit der Einfärbrate $\eta_{dir}$ korrelierte Einfärbtiefe $f_s$ bestimmt. Die Ergebnisse sind in der nachfolgenden vergleichenden Tabelle eingetragen.

Die Einfärbtiefe $f_s$ weist unter Zugrundelegung der obigen Funktion der zeitlichen Transmittivität T(t) folgende Definition auf:

$$f_s \equiv \frac{T(t=0)-T(t\rightarrow\infty)}{T(t=0)},$$

wobei die Einfärbtiefe mit der Einfarbrate folgende Korrelation aufweist:

$$\eta_{dir}(t=0) \sim f_s$$

| Schicht | $f_s$ |
|---|---|
| Probe 3 (CdS/$WO_3$) | 3,4% |
| Probe 4 (CdS/Wasserdampf/$WO_3$) | 7,4% |

Wie aus dieser Tabelle ersichtlich ist, verstärkt auch Wasser, das in der Grenzfläche zwischen dem Beeinflussungsmaterial 2 und dem photochromen Material 1 eingebracht wird, den photochromen Effekt der CdS/$WO_3$-Schicht 3.

Aus dem Einfärbverhalten von $WO_3$-Filmen ist es bekannt, daß unter Einwirkung von Licht Wasser in ein Sauerstoffradikal und in zwei Wasserstoffradikale gespalten wird. Die Wasserstoffradikale bilden möglicherweise mit dem $WO_3$ eine Wolframbronze $HWO_3$ aus, die für die stattfindende Blau-Färbung verantwortlich ist.

Auf die erfinderische Schicht übertragen ergibt dieses nachfolgende mögliche Erklärung. Bei der Farbzentrenbildung der erfinderiscxhen $WO_3$/CdS-Schicht Elektronen-Loch-Paare sind beteiligt, die aus einem inneren Photoeffekt im dem halbleitenden $WO_3$ stammen. Bei einer Reaktion zwischen dem Loch des Elektronen-Loch-Paares und einem Wassermolekül kann - aufgrund der höheren Elektronegativität des Sauerstoffs - die positive Ladung auf den Wasserstoff übergehen.

Hieraus ergibt sich der Schluß, daß eine Bereitstellung von Wasserstoff zweckdienlich ist. Diese Bereitstellung kann insbesondere durch Wasserstoffradikale und/oder -protonen bildende Substanzen wie Platin erfolgen. Des weiteren empfehlen sich noch nichtflüchtige, im der Schicht verbleibende Substanzen mit polar gebundenem und als Proton abspaltbarem Wasserstoff, insbesondere wie Polyvinylalkohol und Polysaccharid.

Da das Beeinflussungsmaterial 2 und das photochrome Material 1 im Vakuum bei ca. $5*10^{-5}$ bis $1*10^{-6}$ mbar aufgedampft werden, kann das Reaktivmaterial 4 einfach zwischen den beiden unterschiedlichen Lagen einer Schicht 3, 3' angeordnet werden. Im Falle von Wasser mit einer Platinbeigabe kann einfach eine geringe Menge Platin verdampft werden und anschließend das Bedampfen mit dem photochromen Material 1 in Anwesenheit einer Wasserdampf aufweisenden Atmosphäre erfolgen.

Das im Bereich der Grenzfläche der unterschiedlichen Lagen von photochromen Material 1 und Beeinflussungsmaterial 2 der Schicht 3, 3' angeordnete Reaktivmaterial 4 verstärkt den photochromen Effekt der Schicht 3, 3'. Es dient dazu, daß vermehrt Wolfram der photochromen Schicht 3, 3' von seiner sechswertigen Reaktionsstufe in eine fünfwertige Reaktionsstufe reduziert wird. Als Reaktivmaterialien haben sich außer Wasser auch nichtflüchtige, im der Schicht verbleibende Substanzen mit polar gebundenem und als Proton abspaltbarem Wasserstoff, insbesondere wie Polyvinylalkohole und Polyscharide empfohlen.

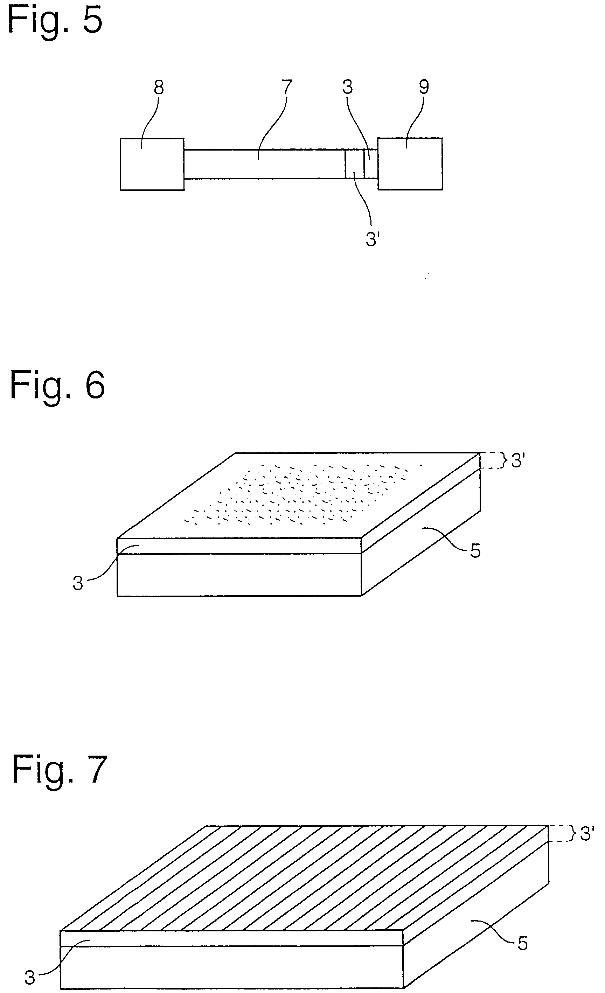

In Figur 5 ist einen Aufbau einer optischen Speichereinheit für die Informations- bzw. Computertechnik unter Verwendung einer erfindungsgemäßen photochromen Schicht 3 und 3' dargestellt. Der Speicher ist im wesentlichen ein Lichtleiter 7, an dessen einem Ende ein ein Licht aussendender Sender 8 und am anderen Ende ein ein Licht detektierender Empfänger 9 angeordnet ist. In dem als Glasfaser ausgebildeten Lichtleiter 7 ist zwischen dem Sender 8 und dem Empfänger 9 die erfindungsgemäße photochrome Schicht 3, 3' angeordnet, wobei der Empfänger 9 sinnvollerweise direkt an der Schicht 3, 3' angeordnet sein sollte.

Bei der Verwendung eines Feldes von Halbleiterlasern als Sender 8, ist es günstig, den Empfänger 9 als Feld von Photodioden auszu bilden, wobei einem jedem Halbleiterlaser des Laserarray's eine Photodiode zuzuordnen ist.

Im Falle zweier Laser als Sender 8 ist es sinnvoll, einen der Laser als Schreib- und Auffrischlaser zu verwenden, wobei dessen Wellenlänge unterhalb der Schaltschwelle $S_1$ des photochromen Effekts der Schicht 3, 3' angeordnet ist. Der andere Laser wird als Leselaser verwandt und weist günstigerweise eine Wellenlänge auf, die oberhalb der Schaltschwelle $S_1$ angeordnet ist.

Zum Beschreiben dieses optischen Speichers sendet der Schreiblaser einen Lichtpuls bestimmter Zeitdauer aus, wodurch sich die Schicht 3, 3' zumindest bereichsweise einfärbt. Nach einer vorgegeben Zeitdauer, die aus einem Diagramm gemäß Figur 4 ermittelt werden kann, wird zur Erhaltung einer Mindestfärbung, die als gesetzter Zustand des Speichers betrachtet wird, die Schicht 3, 3' erneut eine vorgegebene Zeitdauer mit dem Licht des Schreiblasers beaufschlagt. Erfolgt diese erneute Belichtung nicht, so ist der Speicher gelöscht, da dann die Färbung der Schicht 3, 3' abklingt.

Zum Lesen sendet der Leselaser einen Lichtpuls bekannter Intensität aus. Die Intensität des durchgehenden Lichts wird vom Empfänger 9 hinsichtlich der Schicht 3, 3' in Transmission gemessen und je nach verbleibender Intensität einem gesetzten Zustand oder einem ungesetzten Zustand des Speichers zugeordnet.

In Figur 6 ist ein Schichtaufbau mit einer photochromen Schicht 3, 3' auf einem Glas-Substrat 5 dargestellt, bei dem die erfindungsgemäße Schicht 3, 3' analog einem Lichtbildfilm einer Kamera als Belichtungsschicht dient. Die erfindungsgemäße photochrome Schicht 3, 3' wird nun mit einem holographischen Punktmuster belichtet. Aufgrund der reversiblen Eigenschaft des photochromen Effekts der erfindungsgemäßen Schicht 3, 3' muß die erfindungsgemäße Schicht 3, 3' nach einer bestimmten Zeit, in der die Färbung der photochromen Schicht 3, 3' nachläßt, erneut mit dem für eine gewollte Holographie notwendigen Punktmuster belichtet werden. Bei diesem Anwendungsfall stellt die erfindungsgemäße Schicht 3, 3' also einen temporären holographischen Bildspeicher dar.

Ein andere Anwendungsfall der erfindungsgemäßen Schicht 3, 3' als temporärer Bildspeicher ist in Figur 7 dargestellt. Der prinzipielle Schichtaufbau dieses Ausführungsbeispiels entspricht dem jenigen nach Figur 6. Allerdings handelt es sich bei dem gespeicherten Bild um ein temporäres Strichgitter, wie es bspw. zur Interferenzbildung von elektromagnetischen Wellen verwendet wird. Dadurch, daß das durch die Färbung hergestellte Gitter ohne weitere Maßnahmen nur eine bestimmte Zeit erhalten bleibt, ist es nach einer Abklingzeit` die sich aus der Abnahme des photochromatischen Effekts ermitteln läßt, möglich, bspw. den Strichabstand und andere Kenngrößen des Gitters gezielt zu verändern. Dadurch ergibt sich eine einfache Möglichkeit um bspw. eine Anpassung eines Interferometergitter an jeweils unterschiedliche Gegebenheiten und Erfordernisse vorzunehmen.

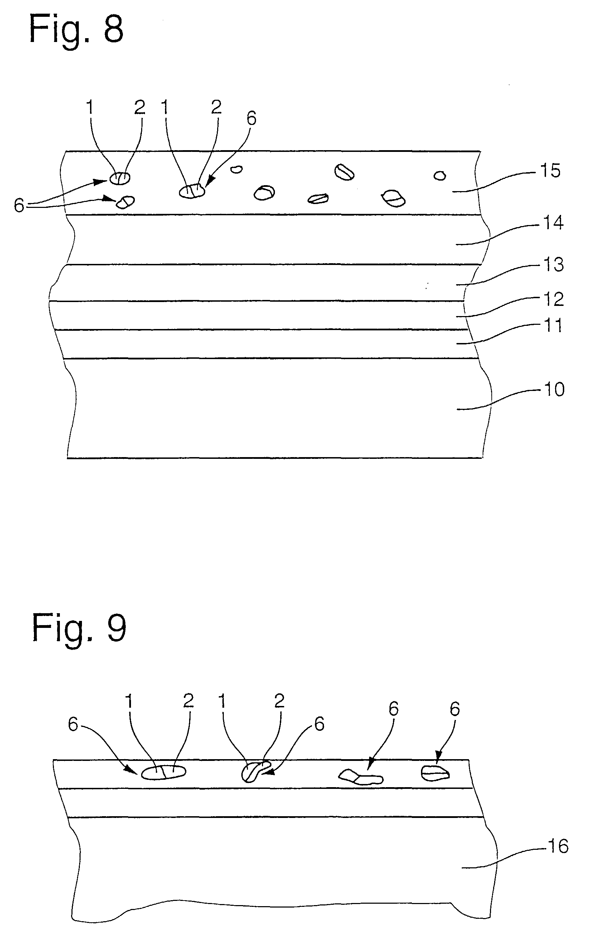

In Figur 8 ist einen Lackaufbau eines Effekt-Lacks einer Kfz-Karosserie dargestellt, wobei dem Effekt-Lack Pigmente 6 beigegeben sind, welche Pigmente 6 eine erfindungsgemäße photochrome Schicht aufweisen. Die Anwendung des Effekt-Lackes ist natürlich nicht auf die bevorzugte Verwendung für Kfz-Karosserien beschränkt, sondern umfaßt auch andere Gegenstände, die lackiert werden können.

Der auf einem Blech 10 der Kfz-Karosserie aufgetragene Lackaufbau weist weitgehend den üblichen Aufbau wie Phospatierschicht 11, Grundierschicht 12, Füllschicht 13, Farbschicht 14 und Klarlackschicht 15 auf. Der Klarlackschicht 15 sind Pigmente 6 beigegeben, die eine erfindungsgemäße Schicht 3, 3' mit dem mit dem Beeinflussungsmaterial 2 beschichteten photochromen Material 1 aufweisen.

Die Herstellung der Pigmente 6 kann dadurch erfolgen, daß auf ein Substrat 5, insbesondere einer einige 10 μm dicken Glasfolie, das Beeinflussungsmaterial 2 und das photochrome Material 1 aufgedampft und anschließend die mit der erfindungsgemäßen Schicht 3, 3' bedampfte Glasfolie die Pigmente 6 bildend zerkleinert wird. Als Pigmentgröße ist eine mittlere Größe der Pigmente 6 im unteren bzw. unterhalb des mm-Bereiches, insbesondere kleiner 100 µm günstig. Um Oberfläche-Effekte „Size-Effekte" zu vermeiden wird jedoch eine Größe größer 0.1 µm, insbesondere größer 1 µm bevorzugt.

Die Eigenfarbe einer deratigen $CdS/WO_3$-Schicht 3, 3' ist je nach Schichtdicke der CdS-Schicht bläulich oder grünlich. Für eine bläuliche Eigenfarbe muß die eine gelbe Eigenfarbe aufweisende CdS-Beschichtung jedoch hinreichend dünn sein. Der Farb-Effekt eines Effektlackes ergibt bei einer bläulichen $CdS/WO_3$-Schicht 3, 3', die bei alleinigem Vorliegen $CdS/WO_3$-Schicht 3, 3' in Zusammenwirkung mit einer bspw. roten farbgebenden Farbschicht 14 einen Gesamteindruck der Farbe des Effekt-Lacks je nach Sonnenstand vermittelt, der sich allmählich von rot (ohne Sonne) nach violett (mit Sonne) ändert.

In Figur 9 ist ein Lackaufbau dargestellt, der auf einem Gebäude 16 aufgetragen ist und der mit Pigmenten 6, die die photochrome Schicht 3, 3' aufweisen, versehen ist. Eine mögliche Verwendung derartiger Lackaufbauten ist außer bei der Farbgebung von Gebäuden 16 auch bei Gläsern denkbar, die als Scheiben zur Isolierung von Gebäuden 16 oder als Scheiben von Kraftfahrzeugen vorgesehen sind.

Mit der erfindungsgemäßen photochromen Schicht 3, 3' beschichtete Gebäude 16 bzw. Gläser dienen zur selbständigen Minimierung einer auf eine Sonneneinstrahlung zurückgehenden Aufheizung eines von ihnen begrenzten Innenraums, insbesondere von einem Fahrgastraum eines Kraftfahrzeugs, besonders bevorzugt eines Pkw's.

**Patentansprüche**

1. Schicht mit einem photochromen Material und optisch reversibelem photochromen Effekt und mit einer Schaltschwelle des photochromen Materials außerhalb oder im Randbereich des sichtbaren Spektralbereichs,
**dadurch gekennzeichnet,**
daß das photochrome Material (1) mit einem solchen Beeinflussungsmaterial (2) beschichtet ist, daß die Schaltschwelle ($S_1$) des die Schicht (3, 3') bildenden beschichteten photochromen Materials gegenüber der Schaltschwelle ($S_2$) des unbeschichteten photochromen Materials (1) in Richtung größerer Wellenlängen verschoben ist.

2. Schichtaufbau gemäß Anspruch 1,
**dadurch gekennzeichnet,**
daß das photochrome Material (1) Wolframoxid ($WO_3$)ist.

3. Schichtaufbau gemäß Anspruch 1,
**dadurch gekennzeichnet,**
daß das photochrome Material (1) amorph ist.

4. Schichtaufbau gemäß Anspruch 1,
**dadurch gekennzeichnet,**

- daß das phototchrome Material (1) einen ladungsträgertransportfähigen Kontakt mit dem Beeinflussungsmaterial (2) aufweist,
- daß das Beeinflussungsmaterial (2) zwischen dem elektronischen Valenz- ($E_v$) und dem elektronischen Leitungsband ($E_c$) eine kleinere Bandlücke ($E_g$) als das photochrome Material (1) aufweist,
- daß die Ladungsträger des Beeinflussungsmaterials (2) innerhalb des optischen Spektralbereichs aktivierbar sind und
- daß zumindest für eine Art von Ladungsträgern hinsichtlich eines Ladungsträgertransports zwischen dem Beeinflussungsmaterial (2) und dem photochromen Material (1) unter Beachtung einer etwaigen Potentialbarriere ein quantenmechanisches Übergangsmatrixelement größer Null existiert,
- wobei die Potentialbarriere kleiner als die Differenz des Bandlückenunterschiedes zwischen dem photochromen Material (1) und dem Beeinflussungsmaterial (2) ist.

5. Schichtaufbau gemäß Anspruch 4,
**dadurch gekennzeichnet,**
daß das Beeinflussungsmaterial (2) amorph ist.

6. Schichtaufbau gemäß Anspruch 4,
**dadurch gekennzeichnet,**
daß das photochrome Material (1) Wolframoxid ($WO_3$) und daß das Beeinflussungsmaterial (2) ein Halbleitermaterial ist.

7. Schichtaufbau gemäß Anspruch 4,
**dadurch gekennzeichnet,**
daß das photochrome Material (1) Wolframoxid ($WO_3$) und daß das Beeinflussungsmaterial Cadmiumsulfid (CdS) ist.

8. Schichtaufbau gemäß Anspruch 4,
**dadurch gekennzeichnet,**
das zwischen dem photochromen Material (1) und dem Beeinflussungsmaterial (2) zumindest bereichsweise ein für die Einfärbtiefe der Schicht (3, 3') erhöhendes Reaktivmaterial (4) angeordnet ist.

9. Schichtaufbau gemäß Anspruch 7,
**dadurch gekennzeichnet,**
daß das Reaktivmaterial (4) Wasser und/oder eine nichtflüchtige, im Schichtaufbau verbleibende Substanz mit polar gebundenen und als Proton abspaltbaren Wasserstoff und/oder Polysacharid und/oder Polyvinylalkohol ist.

10. Schichtaufbau gemäß Anspruch 4,
**dadurch gekennzeichnet,**
daß die Schicht (3') mehrere alternierende Lagen aus photochromem Material (1) und aus Beeinflussungsmaterial (2) aufweist.

11. Verfahren zur Herstellung einer Schicht mit einem ab einer bestimmten Wellenlänge Schaltschwelle eintretenden optisch reversiblen photochromen Effekt eines photochromen Materials,
**dadurch gekennzeichnet,**
daß das photochrome Material (1) mit einem Beeinflussungsmaterial (2) beaufschlagt wird.

12. Verfahren nach Anspruch 11,
**dadurch gekennzeichnet,**
daß das Beeinflussungsmaterial (2) und das photochrome Material (1) auf ein Substrat (5), insbesondere aus Glas, aufgedampft wird.

13. Verfahren nach Anspruch 11,
**dadurch gekennzeichnet,**
daß vor dem Auftrag des photochromen Materials (1) auf das Beeinflussungsmaterial (2) bzw. vor dem Auftrag des Beeinflussungsmaterials (2) auf das photochrome Material (1) die jeweils freie und für den nachfolgenden Materialauftrag vorgesehene Oberfläche des jeweiligen Materials mit einem Reaktivmaterial (4), insbesondere mit Wasserdampf beaufschlagt wird.

14. Verwendung der photochromen Schicht gemäß Anspruch 1 als optisches Speichermaterial in der Informations- bzw. Computertechnik.

15. Verwendung der photochromen Schicht gemäß Anspruch 1 als Belichtungsmaterial für holographische Strukturen.

16. Verwendung der photochromen Schicht gemäß Anspruch 1 als Material zur Herstellung von optischen Gittern.

17. Verwendung der photochromen Schicht gemäß Anspruch 1 als Effektmaterial bei Lacken.

18. Verwendung der photochromen Schicht gemäß Anspruch 1 im zerkleinerten Zustand als Pigment (6) in Effektlacken für zu lackierende Gegenstände, insbesondere Kraftfahrzeuge.

19. Verwendung der photochromen Schicht gemäß Anspruch 1 zur lichtwellen- und/oder lichtstärkeabhängigen steuerbaren Isolierung von Gegenständen, insbesondere von Gebäuden.

20. Verwendung der photochromen Schicht gemäß Anspruch 1 als Belag von Glasscheiben, insbesondere von Kraftfahrzeugen.

## Fig. 1

## Fig. 2

# Fig. 3

# Fig. 4

# Fig. 5

# Fig. 6

# Fig. 7

# Fig. 8

# Fig. 9